# FASCICULE DE BREVET EUROPEEN

(11) **EP 2 869 140 B1**
(45) Date de publication et mention de la délivrance du brevet: **06.04.2016**
(21) Numéro de dépôt: 13190872.5
(22) Date de dépôt: 30.10.2013
(51) Int. Cl.: G04C 17/00

(54) **Dispositif de détection de la position des aiguilles d'une montre**
Vorrichtung zur Erfassung der Position der Uhrzeiger
Device for the detection of the position of timepiece hands

(43) Date de publication de la demande: 06.05.2015
(73) Titulaire: The Swatch Group Research and Development Ltd., 2074 Marin (CH)
(72) Inventeur: Tortora, Pierpasquale, 2000 Neuchâtel (CH); Springer, Simon, 3007 Bern (CH)
(74) Mandataire: Supper, Marc

(56) Documents cités:
- WO-A1-2012/162887
- DE-C1- 4 311 065
- FR-A1- 2 884 927
- GB-A- 2 197 968
- JP-A- H0 882 683

## Description

La présente invention concerne un dispositif de détection de la position d'au moins une aiguille d'une montre électromécanique. Plus précisément, la présente invention concerne un tel dispositif de détection qui comprend une source de lumière et un système de détection de la, lumière.

On connaît des montres électromécaniques à aiguilles dans lesquelles l'aiguille des heures et l'aiguille des minutes d'affichage de l'heure courante sont entraînées soit par un même moteur électrique, soit par des moteurs électriques distincts qui font avancer les roues du mécanisme horloger pas à pas. Dans les deux cas, il peut arriver qu'en raison des chocs subis par la montre, de la présence de champs électromagnétiques ou d'autres perturbations externes, on perde des pas moteur. Ceci a pour conséquence que, bien que l'horloge interne de la montre fournisse une indication juste de l'heure courante, les aiguilles d'heures et de minutes fournissent une indication faussée de cette heure courante, car les moteurs ont sauté de quelques pas sous l'effet de la perturbation externe appliquée à la montre. Il est donc nécessaire de resynchroniser la position des aiguilles d'heures et de minutes, soit à la demande d'un logiciel d'application, soit à la demande de l'utilisateur.

Une solution connue pour détecter la position d'une roue d'un mécanisme horloger pour une montre électromécanique à aiguilles consiste à disposer de part et d'autre de la planche de la roue une source de lumière émettant un faisceau lumineux et un système de détection de la lumière. La source de lumière et système de détection de la lumière sont disposés en regard l'un de l'autre, et un trou est ménagé dans la planche de la roue sur le chemin de la source de lumière et du système de détection de lumière. Lorsque le trou arrive à hauteur de la source de lumière, le faisceau lumineux passe à travers le trou et tombe sur le système de détection de la lumière, ce qui permet de fournir une indication précise sur la position de la roue.

Un tel dispositif de détection de la position d'une roue d'un mécanisme horloger pour une montre électromécanique à aiguilles présente plusieurs inconvénients. Le premier de ces inconvénients réside dans le fait que la source de lumière et le système de détection de la lumière sont disposés de façon étagée suivant une direction essentiellement verticale, ce qui rend le dispositif de détection encombrant et nécessite de prévoir des dégagements vers le haut et vers le bas. Le second problème se pose de manière critique dans le cas où l'on cherche à détecter la position de deux roues coaxiales comme tel est le cas d'une roue des heures et d'une roue des minutes. En effet, dans un tel cas de figure, il est nécessaire, par exemple, de disposer les deux systèmes de détection de la lumière entre les deux roues et de placer les sources de lumière respectivement au-dessus et en-dessous de l'ensemble des deux roues coaxiales. Un tel agencement est non seulement encombrant mais exige en outre de placer deux des éléments des dispositifs de détection, par exemple les deux systèmes de détection de la lumière, entre les roues, ce qui rend pratiquement impossible une automatisation de la fabrication de tels mouvements horlogers.

Une autre solution pour détecter la position d'une roue d'un mécanisme horloger pour une montre électromécanique à aiguilles est divulguée par la demande de brevet européen SEP 1493935. Plus précisément, ce document divulgue un dispositif de détection de la position d'au moins une première roue d'un mécanisme horloger pour une montre électromécanique à aiguilles, cette première roue s'étendant dans un plan horizontal. Le dispositif de détection comprend au moins une source de lumière émettant un faisceau lumineux et au moins un système de détection de la lumière, ce dispositif de détection comprenant également un premier élément réflecteur de la lumière, la source de lumière et le système de détection de la lumière étant agencés de façon que, dans une position déterminée de la première roue du mécanisme horloger, le faisceau lumineux émis par la source de lumière est réfléchi par le premier élément réflecteur en direction du système de détection de la lumière.

Une telle solution permet avantageusement de détecter la position de deux roues du mécanisme horloger au moyen d'une unique source de lumière et d'un seul élément réflecteur. Toutefois, la source de lumière et le système de détection de la lumière d'une part, et l'élément réflecteur d'autre part sont disposés de part et d'autre de la roue dont on cherche à détecter la position, ce qui augmente l'épaisseur du mécanisme horloger et le rend plus difficile à intégrer dans une boîte de montre

Une autre solution encore pour détecter la position d'une roue d'un mécanisme horloger pour une montre électromécanique à aiguilles est divulguée par la demande de brevet européen EP 2626752 au nom de la Demanderesse. Plus précisément, ce document divulgue un dispositif de détection de la position d'au moins une première roue d'un mécanisme horloger pour une montre électromécanique à aiguilles, cette première roue s'étendant dans un plan. Le dispositif de détection comprend au moins une source de lumière émettant un faisceau lumineux et au moins un système de détection de la lumière. Un premier élément réflecteur de la lumière fait saillie de l'une des surfaces supérieure ou inférieure de la première roue du mécanisme horloger, la source de lumière et le système de détection de la lumière étant agencés de façon que, dans une position déterminée de la première roue du mécanisme horloger, le faisceau lumineux émis par la source de lumière est réfléchi par le premier élément réflecteur en direction du système de détection de la lumière.

Cette autre solution connue procure un dispositif de détection dans lequel le faisceau lumineux émis par la source de lumière est réfléchi par un élément réflecteur qui se dresse à la surface d'une roue d'un mécanisme horloger en direction du système de détection de la lumière. Plutôt que d'être disposés de part et d'autre de la roue, la source de lumière et le système de détection peuvent être disposés à la périphérie de la roue, ce qui permet de réaliser un gain de place sensible. Par contre, ce dispositif doit être intégré dans le mécanisme horloger, ce qui rend la construction de ce mécanisme horloger plus complexe et donc plus coûteuse.

Une autre solution encore pour détecter la position d'une aiguille d'une montre électromécanique est divulguée par la demande de brevet japonais JP 2006-275803. Dans ce document, le dispositif de détection de la position d'une aiguille comprend deux sources de lumière et deux systèmes de détection de la lumière. Une première paire formée d'une source de lumière et d'un système de détection de la lumière permet de détecter la position d'une première aiguille, tandis qu'une seconde paire formée d'une source de lumière et d'un système de détection de la lumière permet de détecter la position d'une seconde aiguille. Les deux paires de sources de lumière et de systèmes de détection de la lumière sont agencés sous le cadran de la montre qui, à cet effet, est translucide.

Le dispositif de détection de la position d'une aiguille de montre brièvement décrit ci-dessus permet de détecter la position d'une aiguille de montre au moyen de composants montés sous la surface du cadran de la montre. On évite donc de devoir monter le dispositif de détection dans le volume du mécanisme horloger. Par ailleurs, comme les composants du système de détection sont montés sous la surface du cadran de la montre, il est peu, voire pas, nécessaire d'augmenter la hauteur de l'aiguille par rapport à la surface du cadran, de sorte que le système de détection selon l'invention est peu encombrant. Par contre, un inconvénient notable d'un tel dispositif de détection réside dans le fait qu'il requiert deux sources de lumière et deux systèmes de détection pour pouvoir détecter la position de deux aiguilles distinctes. Un tel dispositif de détection est donc coûteux tant du point de vue des composants nécessaires, que du point de vue du temps de montage.

Le document FR 2,884,927 A1 décrit un procédé ainsi qu'un dispositif de détection de la position des aiguilles d'une montre dans lequel les aiguilles sont identifiées en fonction de leur vitesse de rotation angulaire propre, puis sont placées dans une position de référence définie une fois l'identification réalisée, permettant ainsi de réinitialiser la montre. Pour cela, un capteur optique comprenant un émetteur et un récepteur est disposé au droit des aiguilles, de sorte qu'il puisse émettre un faisceau optique qui va être coupé par les deux aiguilles.

Le procédé de détection de la position des aiguilles divulgué par le document FR 2,884,927 A1 repose donc sur la différentiation des vitesses de rotation respectives des aiguilles et non pas sur l'activation sélective de l'un ou l'autre de deux photo-détecteurs selon qu'un faisceau lumineux produit par une source lumineuse est réfléchi par l'une ou l'autre de deux aiguilles.

Le document DE 43 11 065 C1 décrit un procédé ainsi qu'un dispositif de détection de la position des aiguilles d'une montre dans lequel, à midi précise, un faisceau lumineux émis par un élément émetteur tombe selon un angle de 45° sur une surface réfléchissante d'une première aiguille, puis est réfléchi selon un angle de 90° sur une surface réfléchissante d'une seconde aiguille. Par suite, le faisceau lumineux est rétro-réfléchi par la surface réfléchissante et, après une nouvelle réflexion sur la surface réfléchissante, tombe sur un photo-détecteur.

Le dispositif de détection de la position des aiguilles divulgué par le document DE 43 11 065 C1 ne peut donc fonctionner que lorsque les deux aiguilles sont dans une position déterminée, midi par exemple, et ne permet pas de différencier l'une des aiguilles par rapport à l'autre.

Dans le document JP H08 82683 A, lorsqu'une photodiode détecte à travers un trou de détection le mouvement d'une ombre dû au déplacement rapide d'une aiguille des secondes, cette aiguille des secondes est déplacée pendant 56 minutes et un compteur d'un circuit de commande est remis à zéro. On déplace ensuite pendant 4 minutes l'aiguille des minutes dont le déplacement est plus lent que celui de l'aiguille des secondes et une valeur de comptage est stockée dans le compteur du circuit de commande. Lorsque le déplacement pendant 4 minutes de l'aiguille des minutes est terminé, on fait tourner l'aiguille des secondes pendant 56 minutes, la valeur de comptage du compteur du circuit de commande étant remise à zéro. Après quoi, on déplace pendant 4 minutes l'aiguille des secondes.

Dans le document JP H08 82683 A, une photodiode unique est utilisée pour détecter le passage de l'aiguille des secondes seulement.

Le document GB 2197968 A décrit une montre analogique dans laquelle, à midi, les aiguilles passent à travers une zone de détection munie d'un photo-détecteur et de deux diodes électroluminescentes qui sont alimentées en opposition de phase. La position du photo-détecteur et des deux sources de lumière est telle qu'en temps normal, le photo-détecteur reçoit la lumière émise par les deux sources de lumière par réflexion sur la glace de montre. Par contre, lors du passage de l'aiguille des secondes, seule la lumière produite par l'une des deux sources de lumière est réfléchie sur le capteur car l'aiguille est munie d'un réflecteur qui est dimensionné de façon à ne recouvrir que l'une des deux sources de lumière.

Le dispositif de détection de la position des aiguilles d'une montre décrit dans le document GB 2197968 A nécessite deux sources de lumière pour pouvoir fonctionner.

Dans le document WO 2012/162887 A1, une pièce d'horlogerie analogique à quartz comprend un capteur de position et un émetteur de lumière disposés de façon à définir une zone de réflexion sur le cadran. L'émetteur de lumière émet un faisceau de lumière en direction de l'une quelconque des aiguilles qui réfléchit ce faisceau de lumière en direction du capteur de lumière lorsque l'aiguille passe dans la zone de réflexion. Un circuit de commande relié au circuit d'entraînement de la montre et au capteur de position est programmé pour déterminer la position de l'aiguille qui passe dans la zone de réflexion et pour entraîner le mouvement afin de déplacer l'aiguille dans la position qui convient en réponse à la détermination de la position.

Dans le document WO 2012/162887 A1, seule la position d'une unique aiguille est déterminée.

La présente invention a pour but de pallier les inconvénients susmentionnés ainsi que d'autres encore en procurant un dispositif de détection de la position d'au moins une aiguille d'une montre électromécanique qui soit notamment moins complexe.

A cet effet, la présente invention concerne un dispositif de détection de la position d'au moins une première et une seconde aiguilles d'une montre électromécanique, ces première et seconde aiguilles se déplaçant au-dessus d'un cadran, le dispositif de détection comprenant une unique source de lumière émettant un faisceau lumineux en direction des première et seconde aiguilles, et un premier et un second systèmes de détection de la lumière, la source de lumière est les premier et second systèmes de détection de la lumière étant montés sur ou sous le cadran, la source de lumière et les premier et second systèmes de détection de la lumière étant agencés de façon que, dans une position déterminée de la première aiguille, le faisceau lumineux émis par la source de lumière est réfléchi par la première aiguille en direction du premier système de détection, et dans une position déterminée de la seconde aiguille, le faisceau lumineux émis par la source de lumière est réfléchi par la seconde aiguille en direction du second système de détection.

Grâce à ces caractéristiques, la présente invention procure un dispositif de détection de la position d'une aiguille d'une pièce d'horlogerie électromécanique permettant, au moyen d'une source de lumière unique, de détecter la position de deux aiguilles distinctes. Un tel dispositif de détection est donc moins coûteux tant du point de vue des composants nécessaires, que du point de vue du temps de montage et de l'encombrement.

Selon une caractéristique complémentaire de l'invention, la première aiguille et la seconde aiguille comprennent chacune une surface qui réfléchit le faisceau lumineux en direction du système de détection de la lumière.

A l'image de la première aiguille qui comprend une première surface réfléchissante, la seconde aiguille comprend une seconde surface qui est agencée pour réfléchir de manière directionnelle le faisceau lumineux émis par la source de lumière en direction du second système de détection. Grâce à cette caractéristique, il est possible, à l'aide d'une source de lumière unique, de détecter de manière différenciée, la position de deux aiguilles distinctes.

Selon une autre caractéristique de l'invention, la source de lumière et le système de détection de la lumière sont alignés selon une droite qui passe par un centre du cadran de la montre.

Selon encore une autre caractéristique de l'invention, la source de lumière est disposée entre les premier et second systèmes de détection de la lumière.

Selon encore une autre caractéristique de l'invention, la source de lumière émet un faisceau lumineux verticalement vers le haut.

Selon encore une autre caractéristique de l'invention, la source de lumière est une source laser à émission de surface et à cavité verticale, mieux connue sous sa dénomination anglo-saxonne Vertical Cavity Surface Emission Laser ou VCSEL.

Selon encore une autre caractéristique de l'invention, dans le cas où la source de lumière et le système de détection de la lumière sont montés sous le cadran de la montre, soit le cadran est transparent à la longueur d'onde de la lumière émise par la source de lumière, soit la source de lumière et le système de détection de la lumière sont disposés en regard d'ouvertures correspondantes ménagées dans le cadran.

D'autres caractéristiques et avantages de la présente invention ressortiront plus clairement de la description détaillée qui suit d'un exemple de réalisation du dispositif de détection selon l'invention, cet exemple étant donné à titre purement illustratif et non limitatif seulement en liaison avec le dessin annexé sur lequel:
- la figure 1 est une vue en plan d'un cadran de montre selon l'invention sur lequel sont montés une source de lumière ainsi qu'un premier et un second systèmes de détection de la lumière ;
- la figure 2A est vue en coupe et de profil du cadran de montre de la figure 1 sur laquelle on voit une première et une seconde aiguilles qui se déplacent au-dessus du cadran, la source de lumière émettant vers le haut un faisceau lumineux qui est réfléchi vers le premier système de détection de la lumière par une première surface de la première aiguille, et vers le second système de détection de la lumière par une seconde surface de la seconde aiguille ;
- la figure 2B est une vue à plus grande échelle de la zone entourée d'un cercle sur la figure 2A, et
- les figures 3A et 3B illustrent une variante de réalisation de l'invention dans laquelle les faces inférieures des aiguilles des heures et des minutes sont munies d'un premier, respectivement d'un second réseaux de diffraction qui diffractent le faisceau lumineux émis par la source de lumière selon des angles différents.

La présente invention procède de l'idée générale inventive qui consiste à monter sur ou sous la surface d'un cadran une source lumineuse unique et un premier et un second systèmes de détection de la lumière. Au moins une première et une seconde aiguilles qui se déplacent au-dessus du cadran sont capables de réfléchir en direction du système de détection de la lumière correspondant un faisceau lumineux qui est émis par la source lumineuse. Le dispositif de détection de la lumière selon l'invention qui se compose de l'unique source de lumière et des premier et second systèmes de détection de la lumière est donc peu encombrant. Il est donc possible de détecter la position d'une première et d'une seconde aiguilles au moyen d'une source de lumière unique et d'un premier et second systèmes de détection de la lumière seulement. En effet, les première et seconde aiguilles sont munies chacune d'une surface qui réfléchit sélectivement le faisceau lumineux vers le premier système de détection de la lumière, respectivement le second système de détection de la lumière. On peut donc détecter la position d'une pluralité d'aiguilles sans devoir multiplier les sources de lumière.

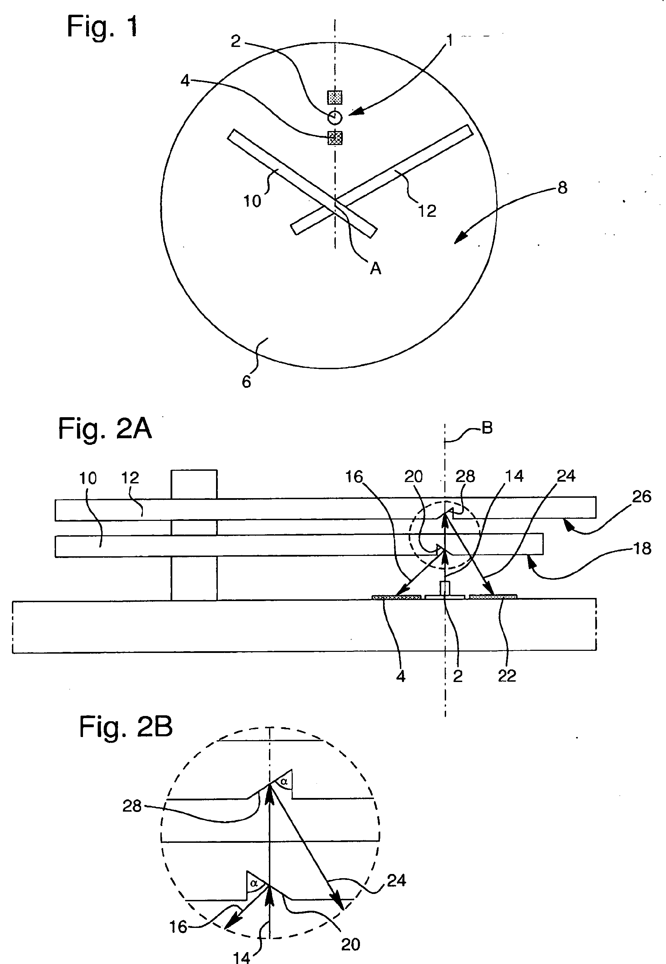

La figure 1 est une vue en plan d'un cadran de montre selon l'invention sur lequel sont montés une source de lumière ainsi qu'un premier et un second systèmes de détection de la lumière. Désigné dans son ensemble par la référence numérique générale 1, le dispositif de détection 1 selon l'invention comprend une source de lumière 2 ainsi qu'un premier système de détection de la lumière 4 montés sur une surface supérieure 6 d'un cadran 8. Une première aiguille 10, par exemple une aiguille des heures, et une seconde aiguille 12, par exemple une aiguille des minutes, se déplacent au-dessus du cadran 8. Préférentiellement, la source de lumière 2 et le premier système de détection de la lumière 4 sont alignés selon une droite qui passe par le centre A du cadran 8.

Selon une variante de réalisation de l'invention, dans le cas où la source de lumière 2 et/ou le système de détection de la lumière 4 sont montés sous le cadran 8 de la montre, soit le cadran 8 est transparent à la longueur d'onde de la lumière émise par la source de lumière 2, soit la source de lumière 2 et/ou le système de détection de la lumière 4 sont disposés en regard d'ouvertures correspondantes ménagées dans le cadran 8.

Comme on peut le voir à l'examen des figures 2A et 2B, la source de lumière 2 émet un faisceau lumineux 14 vers le haut en direction des aiguilles des heures et des minutes 10 et 12. A titre d'exemple non limitatif, la source de lumière 2 est une source laser à émission de surface et à cavité verticale, mieux connue sous sa dénomination anglo-saxonne Vertical Cavity Surface Emission Laser ou VCSEL.

La source de lumière 2 et le premier système de détection de la lumière 4 sont agencés de telle sorte que, dans une position déterminée de l'aiguille des heures 10, le faisceau lumineux 14 émis par la source de lumière 2 est réfléchi par l'aiguille des heures 10 selon un faisceau lumineux 16 en direction du premier système de détection de la lumière 4.

A cet effet, l'aiguille des heures 10 est munie dans une surface inférieure 18 d'une première surface réfléchissante 20 inclinée en direction du cadran 8 qui renvoie de manière sélective le faisceau lumineux 16 en direction du premier système de détection 4.

Selon le mode préféré de réalisation de l'invention, le dispositif de détection 1 comprend un second système de détection de la lumière 22 monté sur ou sous le cadran 8, la source de lumière 2 étant disposée entre le premier et le second systèmes de détection de la lumière 4, 22, les trois composants étant alignés. Dans une position déterminée de l'aiguille des minutes 12, le faisceau lumineux 14 émis par la source de lumière 2 est réfléchi par l'aiguille des minutes 12 selon un faisceau lumineux 24 en direction du second système de détection de la lumière 22.

A cet effet, l'aiguille des minutes 12 est munie dans une face inférieure 26 d'une seconde surface réfléchissante 28 inclinée en direction du cadran 8 selon une inclinaison différente de l'inclinaison de la première surface réfléchissante 20 qui renvoie de manière sélective le faisceau lumineux 24 en direction du second système de détection de la lumière 22.

On comprendra de ce qui précède que l'orientation de la surface réfléchissante 20 de l'aiguille des heures 10 doit être différente de l'orientation de la surface réfléchissante 28 de l'aiguille des minutes 12 afin qu'une surface réfléchissante donnée ne réfléchisse la lumière que vers l'un des systèmes de détection de la lumière, à l'exclusion de l'autre système de détection. Pour cela, les surfaces réfléchissantes 20, 28 sont symétriques par rapport à un axe vertical de symétrie B, et sont inclinées selon un angle α qui va en augmentant du haut vers le bas.

Grâce à cette caractéristique, il est possible, à l'aide d'une unique source de lumière, de détecter la position de deux aiguilles ou plus. On comprendra également que, bien que dans l'exemple illustré à la figure 2A, la source de lumière 2 soit disposée entre le premier et le second systèmes de détection de la lumière 4, 22, un tel agencement n'est pas obligatoire. En effet, c'est l'inclinaison des première et seconde surfaces réfléchissantes 20 et 28 qui détermine l'endroit de la surface 6 du cadran 8 où tombe le faisceau lumineux 14 après réflexion, et donc le positionnement des systèmes de détection de la lumière 4, 22.

Lorsque la présence de l'aiguille des heures 10 est détectée, on connaît avec précision la position de l'aiguille des heures 10 et l'on sait de combien de pas il faut faire avancer un moteur électrique d'entraînement pour amener l'aiguille des heures 10 à la bonne position sur le cadran 8 de la montre. De la même manière, on détecte avec précision la position de l'aiguille des minutes 12 et l'on sait de combien de pas il faut faire avancer un moteur électrique d'entraînement pour que l'aiguille des minutes 12 atteigne la position voulue sur le cadran 8 de la montre.

Il suffit donc d'une seule source de lumière 2 et de deux systèmes de détection de la lumière 4, 22 pour détecter de manière séquentielle la position des deux aiguilles respectives10 et 12. La synchronisation des deux aiguilles 10, 12 doit se faire de manière séquentielle, c'est-à-dire une aiguille après l'autre. Pour de plus amples détails sur le procédé de synchronisation des aiguilles, on se reportera par exemple aux actes du Congrès International de Chronométrie 2007, pages 107 à 109, publiés par la Société suisse de chronométrie. Le dispositif de détection optique selon l'invention peut être calibré de manière analogue à l'oscillateur LC décrit dans ce document dont la fréquence varie à l'approche d'une cible métallique. C'est ainsi que, lors de la mise en service de la montre ou au changement de pile, le circuit de commande va imposer un tour complet à chaque aiguille équipée du système de détection optique selon l'invention afin de déterminer la position de l'aiguille, à l'aide du point maximum de réflexion de la lumière par l'aiguille considérée. Un tour de cadran nécessite par exemple 180 pas moteur. Après chaque pas moteur, une mesure de l'intensité lumineuse détectée par le système de détection de la lumière est effectuée. Au passage de l'aiguille face au système de détection de la lumière, l'intensité lumineuse réfléchie par l'aiguille augmente brusquement. Cette augmentation brusque de l'intensité de la lumière mesurée représente la détection de la position de l'aiguille. La position correspondant à l'augmentation brusque de la lumière détectée est alors stockée en mémoire. Après chaque mesure, la valeur de l'intensité lumineuse est numérisée et transmise à un circuit de commande. Lorsque le programme de gestion de la montre ou l'utilisateur demande une synchronisation, le circuit de commande, partant de la position correspondant à l'augmentation brusque de l'intensité lumineuse réfléchie, effectue N pas moteur dans le sens antihoraire sans faire de mesure afin de se positionner avant la position dans laquelle l'aiguille fait face au système de détection de la lumière. Le système de commande effectue ensuite 2N pas moteurs avec une mesure à chacun d'entre eux. Les 2N valeurs ainsi obtenues sont stockées en mémoire. Le circuit de commande calculé alors la position de l'aiguille, la compare à la valeur fournie par son horloge interne et la corrige si nécessaire en imposant des impulsions moteur de rattrapage.

Il va de soi que la présente invention n'est pas limitée au mode de réalisation qui vient d'être décrit et que diverses modifications et variantes simples peuvent être envisagées par l'homme du métier sans sortir du cadre de l'invention tel que défini par les revendications annexées. En particulier, on comprendra que, de préférence, la source de lumière et le ou les systèmes de détection de la lumière sont montés du même côté, supérieur ou inférieur, du cadran. Il est toutefois envisageable de panacher la répartition de la source de lumière et des systèmes de détection de la lumière, en disposant certains d'entre eux du côté supérieur du cadran et les autres du côté inférieur du cadran.

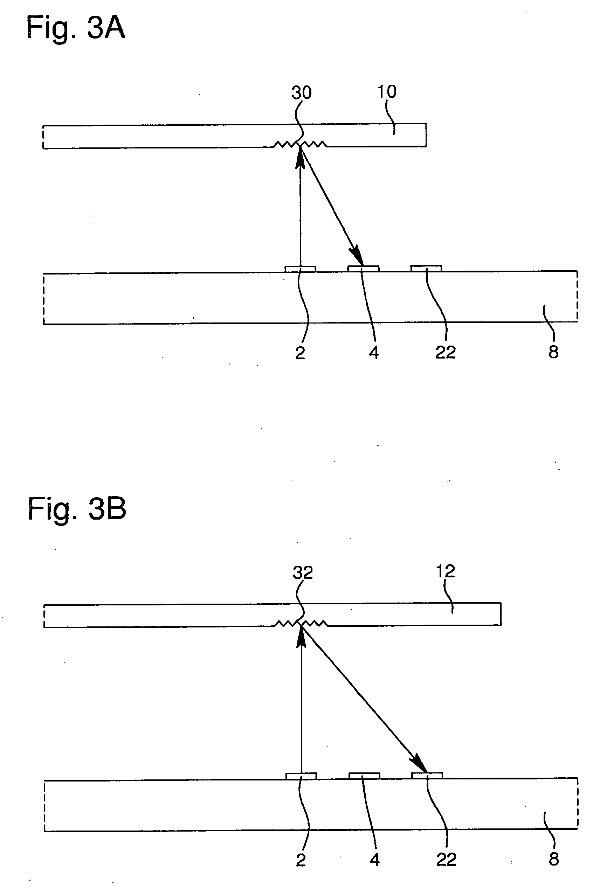

Selon une variante de réalisation illustrée aux figures 3A et 3B, les faces inférieures 18, 26 des aiguilles des heures 10 et des minutes 12 sont munies d'un premier, respectivement d'un second réseaux de diffraction 30 et 32. Comme ces réseaux de diffraction 30, 32 ont des périodicités différentes, le faisceau lumineux 14 émis par la source de lumière 2 est diffracté selon des angles différents et tombe donc sur le premier système de détection de la lumière 4, respectivement le second système de détection de la lumière 22. Ce mode de réalisation a pour avantage qu'il peut être mis en oeuvre avec des aiguilles d'épaisseur standard.

## Revendications

1. Dispositif de détection de la position d'au moins une première et une seconde aiguilles (10, 12) d'une montre électromécanique, ces première et seconde aiguilles (10, 12) se déplaçant au-dessus d'un cadran (8), le dispositif de détection (1) comprenant une unique source de lumière (2) émettant un faisceau lumineux (14) en direction des première et seconde aiguilles (10, 12), et un premier et un second systèmes de détection de la lumière (4, 22), la source de lumière (2) et les premier et second systèmes de détection de la lumière (4, 22) étant montés sur ou sous le cadran (8), la source de lumière (2) et les premier et second systèmes de détection de la lumière (4, 22) étant agencés de façon que, dans une position déterminée de la première aiguille (10), le faisceau lumineux (14) émis par la source de lumière (2) est réfléchi par la première aiguille (10) en direction du premier système de détection (4), et dans une position déterminée de la seconde aiguille (12), le faisceau lumineux (14) émis par la source de lumière (2) est réfléchi par la seconde aiguille (12) en direction du second système de détection (22).

2. Dispositif de détection selon la revendication 1, **caractérisé en ce que** la première et la seconde aiguilles (10, 12) comprennent chacune une surface réfléchissante (20, 28) qui réfléchit le faisceau lumineux (14) en direction du premier système de détection de la lumière (4), respectivement du second système de détection de la lumière (22).

3. Dispositif de détection selon la revendication 2, **caractérisé en ce que** les surfaces réfléchissantes (20, 28) sont ménagées dans une face inférieure (18, 26) de l'aiguille (10, 12) correspondante.

4. Dispositif de détection selon la revendication 3, **caractérisé en ce que** les surfaces réfléchissantes (20, 28) sont symétriques par rapport à un axe vertical de symétrie (B), et sont inclinées selon un angle (α) qui va en augmentant du haut vers le bas.

5. Dispositif de détection selon la revendication 1, **caractérisé en ce que** les faces inférieures (18, 26) des aiguilles des heures (10) et des minutes (12) sont munies d'un premier, respectivement d'un second réseaux de diffraction (30, 32) dont les périodicités sont différentes.

6. Dispositif de détection selon l'une quelconque des revendications 1 à 5, **caractérisé en ce que** la source de lumière (2) et les premier et second systèmes de détection de la lumière (4, 22) sont alignés selon une droite qui passe par un centre (A) du cadran (8) de la montre.

7. Dispositif de détection selon la revendication 6, **caractérisé en ce que** la source de lumière (2) est disposée entre les premier et second systèmes de détection de la lumière (4, 22).

8. Dispositif de détection selon l'une quelconque des revendications 1 à 7, **caractérisé en ce que** la source de lumière (2) émet un faisceau lumineux (14) verticalement vers le haut.

9. Dispositif de détection selon la revendication 8, **caractérisé en ce que** la source de lumière (2) est une source laser à émission de surface et à cavité verticale.

10. Dispositif de détection selon l'une quelconque des revendications 1 à 9, **caractérisé en ce que**, dans le cas où la source de lumière (2) et les systèmes de détection de la lumière (4, 22) sont montés sous le cadran (8) de la montre, soit le cadran (8) est transparent à la longueur d'onde de la lumière émise par la source de lumière (2), soit la source de lumière (2) et les systèmes de détection de la lumière (4, 22) sont disposés en regard d'ouvertures correspondantes ménagées dans le cadran (8).

## Patentansprüche

1. Erfassungsvorrichtung zur Erfassung der Position zumindest eines ersten und eines zweiten Zeigers (10, 12) einer elektromechanischen Uhr, wobei sich der erste und der zweite Zeiger (10, 12) oberhalb eines Ziffernblatts (8) bewegen, die Erfassungsvorrichtung (1) eine einzige Lichtquelle (2) aufweist, die einen Lichtstrahl (14) in Richtung des ersten und des zweiten Zeigers (10, 12) emittiert und ein erstes und ein zweites Lichterfassungssystem (4, 22) aufweist, wobei die Lichtquelle (2) und das erste und das zweite Lichterfassungssystem (4, 22) auf oder unterhalb des Ziffernblattes (8) angeordnet sind, wobei die Lichtquelle (2) und das erste und das zweite Lichterfassungssystem (4, 22) derart angeordnet sind, dass in einer ersten bestimmten Position des ersten Zeigers (10) der von der Lichtquelle (2) emittierte Lichtstrahl (14) vom ersten Zeiger (10) in Richtung des ersten Erfassungssystems (4) reflektiert wird und dass in einer zweiten bestimmten Position des zweiten Zeigers (12) der von der Lichtquelle (2) emittierte Lichtstrahl (14) vom zweiten Zeiger (12) in Richtung des zweiten Detektionssystems (22) reflektiert wird.

2. Erfassungsvorrichtung nach Anspruch 1, **dadurch gekennzeichnet, dass** der erste und der zweite Zeiger (10, 12) jeder eine reflektierende Oberfläche (20, 28) aufweist, die den Lichtstrahl (14) in Richtung des ersten Lichterfassungssystems (4) beziehungsweise des zweiten Lichterfassungssystems (22) reflektiert.

3. Erfassungsvorrichtung nach Anspruch 2, **dadurch gekennzeichnet, dass** die reflektierende Oberfläche (20, 28) in einer Unterseite (18, 26) der korrespondierenden Zeiger (10, 12) ausgebildet sind.

4. Erfassungsvorrichtung nach Anspruch 3, **dadurch gekennzeichnet, dass** die reflektierenden Oberflächen (20, 28) symmetrisch zu einer vertikalen Symmetrieachse (B) sind und um einen Winkel (α) geneigt sind, welcher von oben nach unten hin zunimmt.

5. Erfassungsvorrichtung nach Anspruch 1, **dadurch gekennzeichnet, dass** die Unterseiten der Stundenzeiger (10) und der Minutenzeiger (12) mit einem ersten beziehungsweise einem zweiten Beugungsgitter (30, 32) versehen sind, welche unterschiedliche Periodizitäten aufweisen.

6. Erfassungsvorrichtung nach einem der Ansprüche 1 bis 5, **dadurch gekennzeichnet, dass** die Lichtquelle (2) und die ersten und zweiten Lichterfassungssysteme (4, 22) entlang einer geraden Linie angeordnet sind, die sich durch den Mittelpunkt (A) des Ziffernblatts (8) der Uhr erstreckt.

7. Erfassungsvorrichtung nach Anspruch 6, **dadurch gekennzeichnet, dass** die Lichtquelle (2) zwischen dem ersten und dem zweiten Lichterfassungssystem (4, 22) angeordnet ist.

8. Erfassungssystem nach einem der Ansprüche 1 bis 7, **dadurch gekennzeichnet, dass** die Lichtquelle (2) einen vertikal nach oben gerichteten Lichtstrahl (14) emittiert.

9. Erfassungsvorrichtung nach Anspruch 8, **dadurch gekennzeichnet, dass** die Lichtquelle (2) eine Vertikal-Resonator-Oberflächenemittierende Laserquelle ist.

10. Erfassungsvorrichtung nach einem der Ansprüche 1 bis 9, **dadurch gekennzeichnet, dass** in dem Fall, in welchem die Lichtquelle (2) und die Lichterfassungssysteme (4, 22) unter dem Ziffernblatt (8) der Uhr angeordnet sind, entweder das Ziffernblatt (8) für die Wellenlänge des von der Lichtquelle (2) emittierten Lichts transparent ist, oder die Lichtquelle (2) und die Lichterfassungssysteme (4, 22) im Hinblick auf korrespondierende und im Ziffernblatt (8) vorgesehene Öffnungen angeordnet sind.

## Claims

1. Device for detecting the position of at least a first and a second hand (10, 12) of an electromechanical watch, said first and second hands (10, 12) moving above a dial (8), the detection device (1) including a single light source (2) emitting a light beam (14) towards the first and second hands (10, 12), and a first and a second light detection system (4, 22), the light source (2) and the first and second light detection systems (4, 22) being mounted on or underneath the dial (8), the light source (2) and the first and second light detection systems (4, 22) being arranged so that, in a determined position of the first hand (10), the light beam (14) emitted by the light source (2) is reflected by the first hand (10) towards the first detection system (4), and in a determined position of the second hand (12), the light beam (14) emitted by the light source (2) is reflected by the second hand (2) towards the second detection system (22).

2. Detection device according to claim 1, **characterized in that** the first and second hands (10, 12) each include a reflective surface (20, 28) which reflects the light beam (14) towards the first light detection system (4), respectively the second light detection system (22).

3. Detection device according to claim 2, **characterized in that** the reflective surfaces (20, 28) are arranged in a bottom face (18, 26) of the corresponding hand (10, 12).

4. Detection device according to claim 3, **characterized in that** the reflective surfaces (20, 28) are symmetrical relative to a vertical axis of symmetry (B), and are inclined at an angle (α) which increases from the top downwards.

5. Detection device according to claim 1, **characterized in that** the bottom faces (18, 26) of the hour hand (10) and the minute hand (12) are provided with a first, respectively a second diffraction network (30, 32) of different periodicity.

6. Detection device according to any of claims 1 to 5, **characterized in that** the light source (2) and the first and second light detection systems (4, 22) are aligned on a straight line which passes through a centre (A) of the watch dial. (8)

7. Detection device according to claim 6, **characterized in that** the light source (2) is arranged between the first and second light detection systems (4, 22).

8. Detection device according to any of claims 1 to 7, **characterized in that** the light source (2) emits a light beam (14) vertically upwards.

9. Detection device according to claim 8, **characterized in that** the light source (2) is a vertical cavity surface emission laser.

10. Detection device according to any of claims 1 to 9, **characterized in that**, in the case where the light source (2) and the light detection systems (4, 22) are mounted underneath the watch dial (8), either the dial (8) is transparent to the wavelength of the light emitted by the light source (2), or the light source (2) and the light detection systems (4, 22) are disposed facing corresponding apertures arranged in the dial (8).
